# EUROPÄISCHE PATENTSCHRIFT

(11) **EP 1 145 068 B1**
(45) Veröffentlichungstag und Bekanntmachung des Hinweises auf die Patenterteilung: **05.02.2003**
(21) Anmeldenummer: 00978975.1
(22) Anmeldetag: 25.10.2000
(51) Int. Cl.: G02B 21/00

(54) **VERFAHREN ZUR KORREKTUR VON TOLERANZFEHLERN IN EINEM LASER-SCANNING-MIKROSKOP**
METHOD FOR CORRECTING TOLERANCE ERRORS IN A LASER SCANNING MICROSCOPE
PROCEDE DE CORRECTION D'ERREURS DE TOLERANCE DANS UN MICROSCOPE A BALAYAGE LASER

(30) Priorität: 26.10.1999 DE 19951480
(43) Veröffentlichungstag der Anmeldung: 17.10.2001
(73) Patentinhaber: CARL ZEISS JENA GmbH, 07745 Jena (DE)
(72) Erfinder: TILLE, Sebastian, 07743 Jena (DE); SCHÖPPE, Günter, 07751 Kunitz (DE); MEISEL, Ulrich, 07743 Jena (DE); WEYH, Thomas, 07646 Stadtroda (DE)
(86) Internationale Anmeldenummer: EP0010483
(87) Internationale Veröffentlichungsnummer: WO01031382

(56) Entgegenhaltungen:
- DE-A- 19 529 788
- US-A- 5 138 486
- US-A- 5 777 783
- US-A- 5 880 473

## Beschreibung

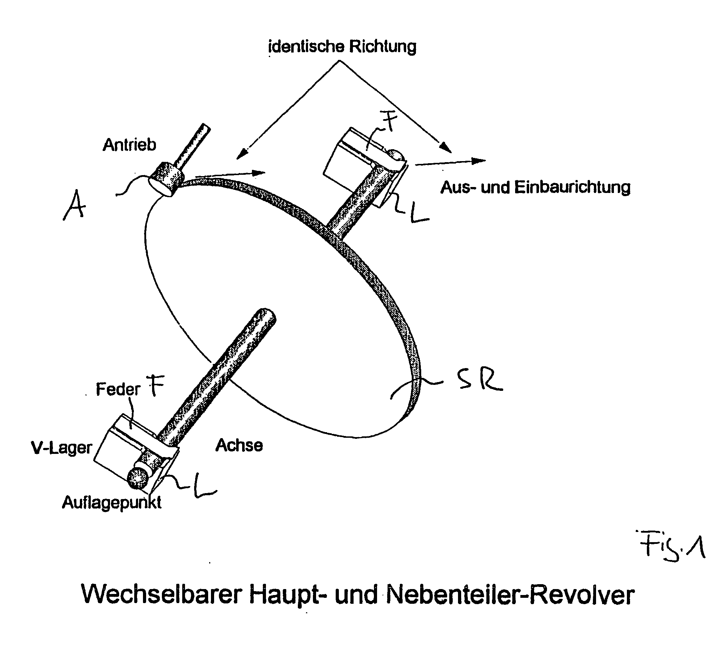

In DE 19702753 wird ein Laser-Scanning-Mikroskop beschrieben, wobei im Detektionsstrahlengang sowie als Hauptteiler Strahlteiler vorgesehen sind, die als Strahlteilerwechsler ausgebildet sind, die auf Teilerrädern oder Teilerrevolvem gelagert sind.
Vorteilhaft können diese Strahlteilerräder komplett auswechselbar gestaltet sein, wie in Fig.1 dargestellt.
Die Strahlteiler selbst sind der Einfachheit halber nicht dargestellt.
Ein Strahlteilerrad SR wird über einen Antrieb A beispielsweise über einen Zahnkranz angesteuert und ist in Lagern L gelagert, die Federn F aufweisen, um die Achse AX des Teilerrades zu halten.
Dieses Teilerrad SR kann nun vorteilhaft an der Federlagerstelle entfernt und durch ein anderes ersetzt werden , wodurch beim Hauptteiler und den Nebenteilem die in DE 19702753 dargestellt sind , maximale Flexibilität bezüglich der eingekoppelten und detektierten Laserwellenlängen gegeben ist

Der Laserstrahl wird durch Strahlteilergläser auf einem Teilerrad geleitet.
Diese Teilergläser haben eine Winkeltoleranz, die bewirkt, daß mit verschiedenen Teilern aufgenommene Bilder nicht deckungsgleich sind.

Für jedes Teilerrad werden vorteilhaft die Abweichungen von etwa +- 2' Toleranz, was immerhin zu Verschiebungen von 9 - 36 Pixeln in Bild führt ausgemessen.
Hierzu wird ein Fadenkreuz als Objekt verwendet und nacheinander mit allen Teilern gescannt. Dieser Vorgang wird iterativ
wiederholt und dabei der Scanneroffset verändert bis die Fadenkreuze übereinander liegen. (Kreuzkorrellation der Bilder maximal). Diese Werte werden in einer Tabelle abgespeichert.

Bei jeder Aufname wird dann aus diesen Werten eine Offsetspannung berechnet mit der die Scanner beaufschlagt werden. Dadurch entstehen deckungsgleiche Bilder ohne daß eine Nachkorrektur erforderlich ist.
Diese Korrektur geschieht online, so daß der Nutzer nichts davon merkt. Dies hat folgende Vorteile:
Keine hochgenaue Montage der Teilerräder erforderlich.
Das Ausmessen kann automatisiert erfolgen.
Hohe Bildqualität.

## Patentansprüche

1. Verfahren zur Korrektur von Toleranzfehlern bei der Auswechslung von Strahtteilern in einem Laser-Scanning- Mikroskop, wobei für mindestens zwei Strahlteiler eines Teilerwechslers mit mehreren Strahlteilern jeweils ein Korrekturwert der Scanneroffsetspannung ermittelt und gespeichert wird, und beim Wechsel zwischen verschiedenen Strahlteilern wird der jeweilige Korrekturwert am Scanner eingestellt, derart, dass die mit verschiedenen Strahlteilern aufgenommenen Bilder deckungsgleich sind.

2. Verfahren nach Anspruch 1,
wobei der mehrere in den Strahlengang einbringbare Strahlteiler aufweisende Teilerwechsler gegen mindestens einen weiteren Teilerwechsler auswechselbar ist.

## Claims

1. Method for correcting tolerance errors when exchanging beam splitters in a laser scanning microscope, wherein for at least two beam splitters of a splitter changer with a plurality of beam splitters a respective correction value of the scanner offset voltage is determined and stored and when changing between different beam splitters the respective correction value is set on the scanner in such a way that the images taken with different beam splitters precisely coincide.

2. Method according to claim 1, wherein the splitter changer comprising a plurality of beam splitters which can be brought into the beam path can be exchanged for at least one further beam splitter.

## Revendications

1. Procédé de correction d'erreurs de tolérance lors de l'échange de diviseurs de rayon dans un microscope à balayage laser, où pour au moins deux diviseurs de rayon d'un changeur de diviseur avec plusieurs diviseurs de rayon, respectivement une valeur de correction de la tension de décalage du dispositif à balayage est détectée et stockée et, lors d'un changement entre des diviseurs de rayon différents, la valeur de correction respective au dispositif à balayage est réglée de façon que les images prises avec des diviseurs de rayon différents coïncident.

2. Procédé selon la revendication 1, où le changeur de diviseur présentant plusieurs diviseurs de rayon pouvant être introduits dans la marche des rayons peut être échangé par au moins un autre changeur de diviseur.
